# EUROPEAN PATENT APPLICATION

(11) **EP 4 005 906 A1**
(43) Date of publication of application: **01.06.2022**
(21) Application number: 21206349.9
(22) Date of filing: 04.11.2021
(51) Int. Cl.: B62J 50/21

(54) **DISPLAY UNIT MOUNTING**

(30) Priority: 23.11.2020 IN 202041050781
(71) Applicant: TVS Motor Company Limited, 600006 Chennai (IN)
(72) Inventor: Godwin, George, 600 006 Chennai (IN); Senthilnathan, Subbiah, 600 006 Chennai (IN); Samraj Jabez, Dhinagar, 600 006 Chennai (IN)
(74) Representative: Patentanwaltskanzlei Matschnig & Forsthuber OG

(57) **Abstract**

The present invention relates to a display unit (235) mounting on a vehicle (100) comprising a handle bar assembly (115), one or more raisers (220), an upper bracket (215), and a display unit (235). The one or more raisers (220) support the handle bar assembly and the upper bracket (215) supports one or more raisers (220) and the display unit (235) is mounted to a support structure (300) and the support structure (300) provides a lift to the display unit (235) in a vertical direction, by a predetermined distance L. The support structure (300) aids in providing an optimal mounting position for the display unit (235) such that the line of sight of visibility is promiscuous across the range of movement of the vehicle as well as the rider.

## Description

### Technical Field

The present subject matter described herein generally relates to a two or three wheeled vehicle, and particularly but not exclusively relates to a display unit mounting of a saddle type vehicle.

### BACKGROUND

Conventionally, an instrument cluster or a speedometer is a gauge that acts as a display unit of a vehicle and displays the instantaneous speed of the vehicle along with other features. Now universally fitted to motor vehicles, they started to be available as options in the early 20th century, and as standard equipment from about 1910 onwards. Early versions of speedometers were called eddy current speedometers but they were later replaced by modern electronic speedometers, because of certain disadvantages with eddy current meters.

These modern electronic speedometers mostly include a rotation sensor mounted in the transmission that delivers a series of electronic pulses whose frequency corresponds to the average rotational speed of the driveshaft of the vehicle, and therefore the vehicle's speed is displayed, assuming the wheels have full traction. The sensor is typically a set of one or more magnets mounted to the output shaft or (in transaxles) differential crown wheel or a toothed metal disk positioned between a magnet and a magnetic field sensor. As the part turns, the magnets or teeth pass beneath the sensor, each time producing a pulse in the sensor as they affect the strength of the magnetic field it is measuring.

Alternatively, particularly in vehicles with multiplex wiring, some manufacturers use the pulses coming from the Antilock Brake System (ABS) wheel sensors which communicate vehicle speed to the instrument panel via the CAN Bus. Most modern electronic speedometers have the additional ability over the eddy current type to show the vehicle speed when moving in reverse gear. In such vehicles, a computer converts the pulses to a speed and displays this speed on an electronically controlled, analog-style needle or a digital display. Pulse information is also used for a variety of other purposes by the Electronic Control Unit (ECU) or full-vehicle control system, e.g. triggering ABS or traction control, calculating average trip speed, or to increment the odometer in place of it being turned directly by the speedometer cable.

Another early form of electronic speedometer relies upon the interaction between a precision watch mechanism and a mechanical pulsator driven by the vehicle's wheel or transmission.

### BRIEF DESCRIPTION OF THE DRAWINGS

The detailed description is described with reference to an embodiment of a saddle type two wheeled vehicle along with the accompanying figures. The same numbers are used throughout the drawings to reference like features and components.
**Fig. 1** illustrates a left hand side view of a two wheeled vehicle, when viewed from left hand side of the rider while the rider is in riding position, in accordance with an embodiment of the present invention.
**Fig. 2a** illustrates a rear perspective view of a front portion of a conventional vehicle.
**Fig. 2b** illustrates a rear perspective view of a front portion of a vehicle in accordance with an embodiment of the present invention.
**Fig. 3** illustrates a front view of a front portion of a vehicle in accordance with an embodiment of the present invention.
**Fig. 4** illustrates a side view of a front portion of a vehicle in accordance with an embodiment of the present invention.
**Fig. 5** illustrates a side view of a front portion of a vehicle in accordance with an embodiment of the present invention.
**Fig. 6** illustrates a side view of a front portion of a vehicle in accordance with an alternate embodiment of the present invention.
**Fig. 6a to Fig. 6c** illustrates multiple views of a supporting structure of a display unit of a vehicle in accordance with an embodiment of the present invention.
**Fig. 7** illustrates an exploded front view of a front portion of a vehicle in accordance with an alternate embodiment of the present invention.

### DETAILED DESCRIPTION

Conventionally, the analog display type speedometer of a vehicle has a case mounted to a front upper portion of the vehicle body and a shaft supported by the case with the shaft centered in an upward and rearward location. The speedometer further includes a circular display surface for displaying functions such as the vehicle speed. The vehicle speed display value is displayed on the display surface and juxtaposed in a circumferential direction around the axis with a pivotal connection to the casing so as to be rotatable around the axis. Further the display surface includes an arrow-shaped indicator or pointer. The indicator rotates to a position corresponding to the numerical value which is further corresponding to the vehicle speed, and simultaneously the vehicle speed is displayed.

Latest modern vehicles particularly motorcycles come with various attractive display features on the speedometer or the instrument cluster. These display features include speed of the vehicle (meter per hour or kilometer per hour), total distance traveled, distance travelled during the latest trip, fuel available in the fuel tank, prediction of distance that can be covered with the fuel available in the tank at any particular moment of time, average fuel consumption at any particular moment of time, time, head lamp position (Full Beam or Short Beam), outside temperature, engine temperature, and tyre pressure. Some other features include a built-in odometer, built in trip meter, maximum speed recall, low battery warning, programmable button function, lap timer and so on. These features vary from vehicle to vehicle, considering the requirements of the rider who is intended to use the vehicle, choice of manufacturer etc..

Therefore, because of the varied features offered and displayed by the speedometer or the instrument cluster in accordance to the timely need of the rider; it becomes important for the rider to be able to easily see the speedometer, quickly process the information displayed and have the speedometer in his line of sight whenever it is required by the rider while driving.

Since, the shape, size and type of two wheeled vehicles, differ from vehicle to vehicle, therefore change in the mounting position of the speedometer also becomes pertinent with respect to the design and model of the particular vehicle. Especially while riding the vehicle at high speeds, when at some instances the rider tends to take a forward leaning riding posture during acceleration or the like. In such positions the line of sight when the rider looks forward is lower when compared with usual line of sight.

In other instances, such as, while taking turns at high speeds, the rider tends to bend towards the sides of the road along with vehicle in order to take an optimal lean angle for balancing the vehicle. During such instances also the line of sight of the rider is lower when compared with usual line of sight.

Therefore, the mounting position of the speedometer should be such that during all instances, while the rider is riding the vehicle, the rider has the speedometer in his line of sight and the information being displayed in adequately conspicuous.

Some known arts disclose the mounting of the speedometer on the front upper panel of the vehicle body located in front of and below the rider's face. However, it is difficult for the rider to read the speed display on such speedometer also, because during the instances of forward leaning or side leaning such speedometer is away from the line of sight of the rider. Along with it, as per the riding dynamics when the rider is taking a turn or speeding the vehicle, ideally he is supposed to look in the direction in which he is riding the vehicle, this is because the body of the rider typically aligns in the direction in which the rider looks and that aids in taking swift turns by the rider and have a full control over the vehicle at high speeds. Such precise control without any mistakes becomes crucial when the vehicle is being ridden on racing tracks by professional racers. But since the known arts provide the display unit mounting on the front upper panel of the vehicle body located in front of and below the rider's face. Therefore, in order to assess one's performance in such vehicles, often the rider tends to look at the instrument cluster and shifts his focus from the road to the instrument cluster. Doing so often takes the focus of the rider away from the road for an extended fractional period of time because of the location of the mounting of the display unit. This extended shift of focus from the road to the display unit can be detrimental for the rider, as while looking at the display unit at such abrupt location, the rider can potentially lose control over the vehicle which leads to unbalancing of the vehicle and thus can lead to detrimental accidents.

Other known arts disclose motorcycles having a speedometer mounted to the top surface of a headlight, and such speedometer is inserted into the inside of the front region of the vehicle through an opening formed on the top surface of the headlight panel. Further a meter cable is connected to the bottom of the speedometer and is supported by a stay provided inside the headlight case making the meter cable rotate in synchronization with the front wheels. But having such design is cumbersome, includes substantial changes in the design layout of the front panel of the vehicle and therefore is costly.

Other known arts suggest direct mounting of the speedometer directly to the handle holder or an upper bracket that further supports the steering handle of the vehicle. However, such arrangement fails to provide a clear line of sight of visibility when the speedometer is mounted to either of the sides of the upper bracket directly and there is a raiser provided in between the upper bracket and the steering handle or the handle bar assembly. The line of sight of visibility is further compromised when the type of handle bar assembly used is a tubular handle bar assembly instead of a split handle bar assembly, as the line of sight of visibility is further obstructed by the handle bar assembly and the rider receives an obstructed view of the speedometer or the display unit. Such obstruction in visibility of the display unit, because of the placement of the handle bar assembly, placement of display unit and the length of the raiser, causes inconvenience for the rider in terms of visibility of the display unit. Such obstruction in visibility of the display unit hampers ergonomic viewing and can further lead to safety related issues, by the rider not being able to monitor his riding performance with respect to functions such as instantaneous speed and gear shifts.

Therefore, mounting of the display unit at an optimum position with respect to the design of different types of vehicles, becomes pertinent and plays an important role keeping in mind the convenience and safety of the rider.

Hence there is a need of an optimal mounting position of the display unit such that the line of sight for visibility of the display unit is promiscuous across the range of movement of the vehicle as well as the rider and thereby achieves safety for the rider by enabling the rider to process the displayed information effectively within a fraction of time. Along with it the mounting structure should be such that the vehicle requires minimum design layout changes.

The present subject matter has been devised in view of the above circumstances as well as solving other problems of the known art.

The present subject matter relates to a display unit mounting on a vehicle comprising a handle bar assembly, one or more raisers, an upper bracket, and a display unit. The one or more raisers support the handle bar assembly. The upper bracket supports one or more raisers. The display unit is mounted to a support structure and the support structure provides a lift to the display unit in a vertical direction, by a predetermined distance.

As per an aspect of the present embodiment, the support structure includes a lower portion and an upper portion.

As per another aspect of the present embodiment, the lower portion of the support structure is mounted to an upper bracket by means of fasteners or by welding.

As per an alternate embodiment, the lower portion of the support structure is mounted to one or more raisers by means of fasteners or by welding.

As per another aspect of the present embodiment the display unit makes an angle θ with a horizontal axis.

As per another aspect of the present embodiment the display unit is disposed substantially above the handle bar assembly and substantially vertically above the headlamp assembly and the front fork assembly.

As per another aspect of the present embodiment the display unit includes a bottom member, a top member, and a middle member. The top member acts as a top cover for the display unit. The bottom member acts as a bottom cover for the display unit and receives the middle member located above the bottom member. The bottom member receives a support structure from below and the support structure is fixedly attached to the bottom member.

As per an alternate embodiment, the support structure includes a protruded attachment provision including a plurality of threads. The attachment provision is fixedly attached to the bottom member by means of welding or by means of thread locking provision. The bottom member includes an inwardly placed provision to receive a protruded attachment provision with threads.

As per an alternate embodiment, the display unit receives the support structure directly.

As per an alternate embodiment, the upper portion of the support structure includes a ring support structure. The ring support structure receives the bottom member and is fastened to the bottom member by means of a plurality of fasteners fastened at a plurality of abutment provisions.

Exemplary embodiments detailing features regarding the aforesaid and other advantages of the present subject matter will be described hereunder with reference to the accompanying drawings. Various aspects of different embodiments of the present invention will become discernible from the following description set out hereunder. Rather, the following description provides a convenient illustration for implementing exemplary embodiments of the invention. It should be noted that the description and figures merely illustrate principles of the present subject matter. Various arrangements may be devised that, although not explicitly described or shown herein, encompass the principles of the present subject matter. Moreover, all statements herein reciting principles, aspects, and examples of the present subject matter, as well as specific examples thereof, are intended to encompass equivalents thereof. Further, it is to be noted that terms "upper", "down", "right", "left", "front", "forward", "rearward", "downward", "upward", "top", "bottom", "exterior", "interior" and like terms are used herein based on the illustrated state or in a standing state of the two wheeled vehicle with a driver riding thereon. Furthermore, arrows wherever provided in the top right corner of figure(s) in the drawings depicts direction with respect to the vehicle, wherein an arrow F denotes front direction, an arrow R indicates rear direction, an arrow Up denotes upward direction, an arrow Dw denotes downward direction, an arrow RH denotes right side, and an arrow LH denotes left side. Also, it is to be understood that the phraseology and terminology used herein is for the purpose of description and should not be regarded as limiting.

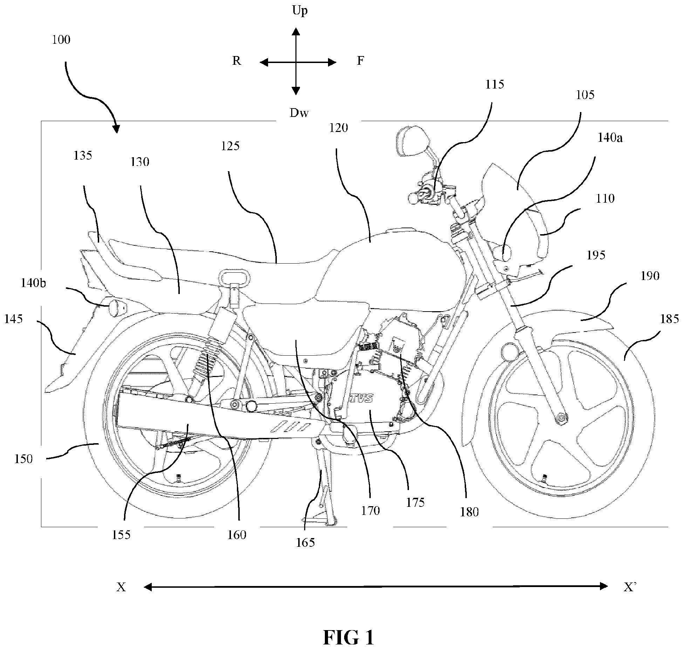

**Fig. 1** illustrates a side view of a vehicle 100 in accordance with an embodiment of the present invention. The vehicle 100 includes a frame assembly 196 to support different parts of the vehicle 100. In an upper portion of the frame assembly 196, a handlebar assembly 115 is rotatably integrally connected to the steering shaft (not shown). The handlebar assembly 115 is used to steer the vehicle 100 and is connected to a front wheel 185 through the steering shaft (not shown) and a front fork assembly (not shown). A USB charger is located in the front of vehicle 100, on the RH side, below the handlebar assembly 115 and above a front fender on the handle bar mounting bracket.

An upper portion of the front wheel185 is covered by a front fender 190 which prevents mud and water from getting deflected towards the steering shaft (not shown). A front license plate is mounted on license plate bracket by means of a visor bottom without being attached to the front visor. The license plate bracket, in turn, is attached to a housing speedometer rear, while partially overlapping the front visor with the lower part of the license plate extending below the bottom of the visor.

Further, the front fork assembly (not labeled) is supported on the front fender 190 by means of a brace fender (not shown).

In a front portion of the frame assembly 196 a fuel tank assembly 120 is arranged immediately behind the handlebar assembly 115 and is disposed over a first power source, for example an engine assembly 180. A seat assembly 125is placed behind the fuel tank assembly 120. The seat assembly 125 includes a front rider seating portion and a pillion rider seating portion. The pillion rider seating portion is placed on the rear part of the frame assembly 196 , where the rear part of the frame assembly 196 is covered by the tail cover assembly 130.

For the safety of the rider and in conformance with the traffic rules, a headlamp assembly 105 that includes a headlamp 110 and front indicator lights 140a are provided in the front portion of the vehicle 100.

The headlamp 110 assembled with a housing headlamp rear is supported by a front fork lower bracket which has a pivot axis for the head lamp 110 beam adjustment. A stay head lamp which is supported on a front fork upper bracket holds the housing headlamp rear and the headlamp assembly 105 to the required beam position through a slot hole to facilitate beam adjustment. Further the bracket license plate front which supports the front License plate is supported on the Front fork upper bracket which is further sandwiched mounted with stay head lamp.

In another embodiment the headlamp cowl of headlamp assembly 105 is omitted such that a new location or mounting of the harness is provided by means of a hole clip provided on two sides (LH and RH) of the headlamp housing itself. The headlamp housing is the rear cover of the headlamp assembly 105. These two hole clips are used to secure the LH harness and the RH harness to the headlamp housing using some fastening member, such as a cable tie, through the respective hole clips.

On the rear portion of the two wheeled vehicle 100 a tail lamp (not labeled) and rear indicator light 140b are provided on the rear portion of the tail cover assembly 130. Above the tail cover assembly 130 and behind the seat assembly 125 a pillion handle 135 is provided for the pillion rider to grab.

Suspension systems are provided for comfortable steering of the two wheeled vehicle 100 on the road. A front suspension assembly 195 serves as rigidity component for the front portion of the vehicle 100 just like the frame assembly 196. The front suspension assembly 195 clamped to the head tube (not shown) through an upper bracket (not shown) and a lower bracket (not shown) is capable of being moved to the left and right. Further, a rear suspension system 160, which is a hydraulic damped arrangement, is connected to the frame assembly 196. The rear suspension system160 comprises of at least one rear suspension 160 preferably disposed centrally in the longitudinal mid plane of the vehicle 100. However, in a vehicle 100 with two rear suspensions, the same may be disposed on the left side and the right side respectively of the vehicle 100.

The first power source, for example the engine assembly 180 is mounted to a front lower portion of the frame assembly 196 by means of an engine mounting bracket (not shown). The engine assembly 180 is partially covered on the lower side of the engine assembly 180 by an engine cover 175. The engine assembly 180 is equipped with an exhaust system that includes an exhaust pipe (not labeled) connected to the engine assembly 180 and a muffler assembly 155 connected to the exhaust pipe. The muffler assembly 155 extends rearwards along the right side of the rear wheel 150. A driver PCB is attached to heatsink for heat dissipation. The Driver PCB heatsink is arranged such that heatsink exposed outside the headlamp housing and is exposed to outside air.

Further, a swing arm (not labelled) extending rearwards is swingably connected to a lower rear portion of the vehicle 100. The rear wheel 150 is rotatably supported at a rear end of the swing arm (not labeled). Power from the engine assembly 180 is transmitted to the rear wheel 150 through a power drive mechanism, such as a drive chain, so as to drive and rotate the rear wheel 150. A center stand 165 is provided in between the front wheel 185 and the rear wheel 150 for parking the vehicle 100.

A rear fender145 for covering an upper side of the rear wheel 150 is mounted to a rear portion of the vehicle 100 to prevent mud and water splashed by the rotating rear wheel 150 from entering the muffler assembly 155, the engine assembly 180 and other parts disposed close by. To enhance the overall aesthetics of the vehicle 100 and to prevent undesired foreign particles from entering parts of the vehicle 100, a plurality of rear covers (not labeled) is attached to a rear portion of the frame assembly 196.

Area below the seat assembly 125 and the fuel tank assembly 120 of the vehicle 100 is covered on both sides by a cover frame assembly 170. The cover frame assembly 170 includes the one or more side covers. XX' represents vehicle length wise longitudinal direction.

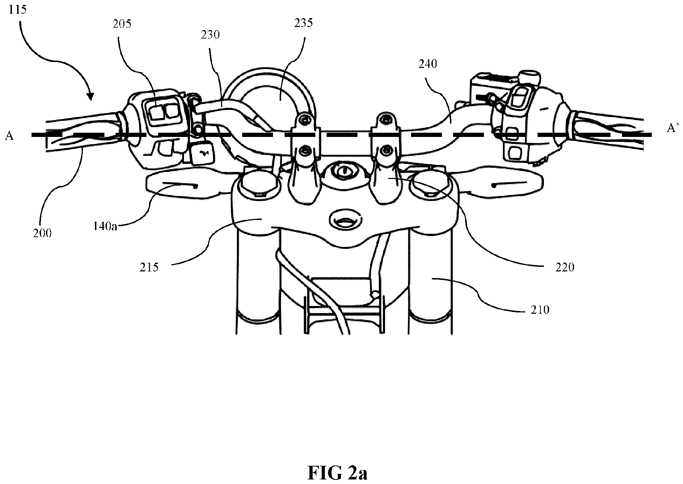

**Fig. 2a** illustrates a rear perspective view of a front portion of a conventional vehicle. The present illustration illustrates a conventional vehicle including a handle bar assembly 115, an upper bracket 215, a pair of front fork 210 attached to the upper bracket 215. The upper bracket 215 has the pair of front fork 210 attached below and a pair of raisers 220 extending out upwardly from above the upper bracket 215. The pair of raisers 220 further support the handle bar tube 240 of the handle bar assembly 115. The handle bar tube 240 extends, vehicle widthwise, in both directions, further including a handle bar grip 200 in at each rear end. An adjoining switch panel 205 is placed beside the handle bar grip 200, which is used by the rider to control the functions of the vehicle. The switch panel 205 is further connected to one or more cables, which aid in functions, for example braking. A pair front indicator lights 140a are disposed laterally outwards in an area adjoining the upper bracket 215.

The present illustration in particular illustrates a conventional setup of a display unit 235, which is usually mounted directly to the upper bracket 215 of the front portion of the conventional vehicle. The placement of the display unit 235 is such that, it is mounted to rear left side of the upper bracket. In such conventional setup, especially with vehicles which are given a vintage look, have the length of the raisers 220 is considerably large; because of which the placement of the display unit 235 falls parallel to the handle bar tube 230 of the handle bar assembly 115 in a horizontal axis AA' passing through the handlebar portion disposed between the raisers 220. Therefore, the display unit gets hidden by the handle bar tube 230 of the handle bar assembly 115, when viewed from the rear side of the vehicle. As a result, when a rider tries to view the contents of the display unit 235 while riding the vehicle, the line of sight of visibility of the rider is obstructed by the handle bar assembly 115, and he receives an obstructed view of the display unit 235. Such obstruction in visibility of the display unit 235, because of the placement of the handle bar assembly 115, placement of display unit 235 and the length of the raiser 220, causes inconvenience for the rider in terms of visibility of the display unit 235. Such obstruction in visibility of the display unit 235 can further lead to safety related issues, as the rider being not able to monitor his riding performance with respect to functions such as instantaneous speed and gear shifts.

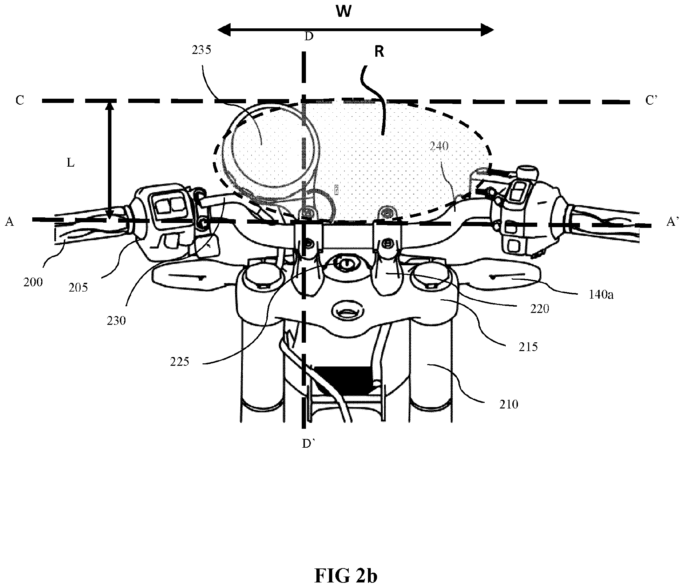

**Fig. 2b** illustrates a rear perspective view of a front portion of a vehicle 100 in accordance with an embodiment of the present invention. The present illustration shows a front view of the vehicle 100 as seen from a rider's viewpoint including a handle bar assembly 115, an upper bracket 215, and a pair of front fork 210 attached to the upper bracket 215. The upper bracket 215 has the pair of the front fork 210 attached below, a key slot 225 placed on the middle portion and a pair of raisers 220 extending out upwardly from above. The pair of raisers 220 further supports the handle bar tube 240 of the handle bar assembly 115. The handle bar tube 240 extends vehicle widthwise in both directions, further including a handle bar grip 200 on each rear end. An adjoining switch panel 205 is placed beside the handle bar grip 200, which is used by the rider to control the functions of the vehicle. The switch panel 205 is further connected to one or more cables, which aid in functions, for example braking. A pair front indicator lights 140a are disposed laterally outwards in an area adjoining the upper bracket 215.

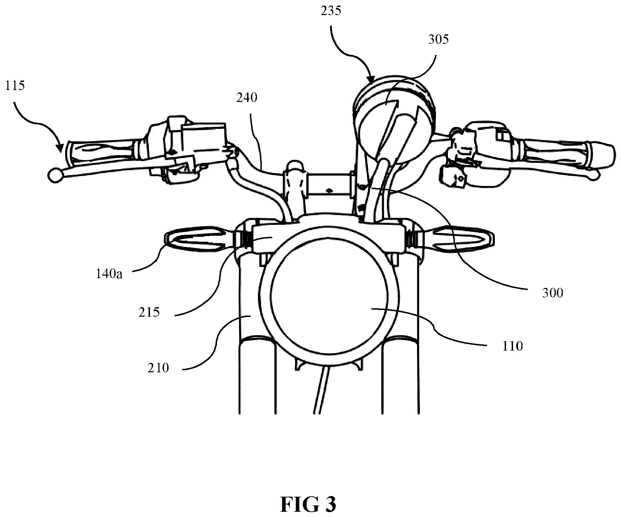

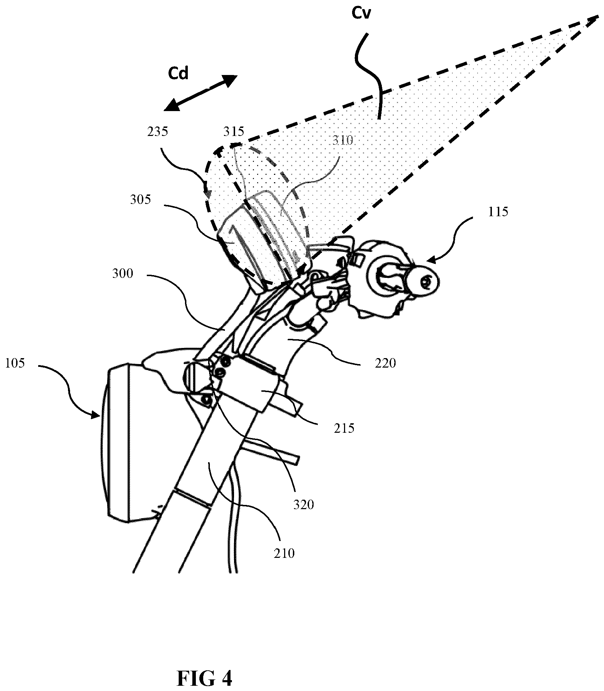

In order to counter visibility issues of the display unit 235, as discussed in description of Fig. 2a, especially in vehicles 100 having a vintage look, tubular handle bar assembly 115 and high risers 220; the display unit 235 in the present embodiment is disposed on a support structure 300 (shown in Fig. 3) instead of the direct mounting of the display unit 235 to the upper bracket 215 of the vehicle 100. As per the present embodiment the support structure 300 is mounted to the upper bracket 215. As per the present embodiment the support structure 300 provides a considerable lift to the display unit 235 in a vertical direction DD'. The lift to the display unit 235 is such that the difference in positions of the display unit 235 in terms of distance is L. The distance L is the difference between the position of a conventionally placed display unit disposed parallel to and behind the handle bar tube 230 of the handle bar assembly 115 in a horizontal axis AA' (as shown in Fig. 2a), and the position of the display unit 235 along with the support structure 300 reaching up to another horizontal axis CC' (as shown in present figure 2b). Along with it, the display unit 235 along with the support structure 300 is configured such that the display surface makes an angle θ with a horizontal plane passing through axis AA'. As per an embodiment, the range of the angle θ, for example varies from 45 degrees to 90 degrees. As per another embodiment, the display unit is disposed offset from the longitudinal central plane of the vehicle such that the display unit at least partially overlaps one of the right or left suspension front fork 210. As per an aspect of the present invention, the display unit is configured in a region R which is substantially above the handle bar assembly and within the dynamic cone of vision Cv (shown in Fig 4) of the rider. The dynamic cone of vision is a three-dimensional region defined by a predetermined upper limit distance above the handle bar assembly wherein the upper limit of the predetermined distance is L from the handle bar and a lateral width W which is substantially equal to the lateral width of the front fork systems and the depth of the region being equal to Cd. As per an aspect of the present invention, the optimum configuration to achieve desired safe viewing of the display unit is determined by a volumetric region defined by ellipsoid of dimension L x W x Cd wherein L is substantially equal to Cd and W is equal to 2 times of L or Cd.

The lift in the position of the display unit 235 by the distance of L and the position of the display unit 235 at an angle θ enables the rider to view the display unit 235, without any hindrance or obstruction, aiding to convenience of the rider and adding the safety of the rider.

**Fig. 3** illustrates a front perspective view of a front portion of a vehicle 100 in accordance with an embodiment of the present invention. The present illustration shows the front portion of a vehicle 100 when viewed from the vehicle front, including the headlamp 110 of the headlamp assembly 115 (Fig. 1). A support structure 300 is shown extending upwardly from a region in the vicinity of the headlamp assembly 115 and the front fork assembly 210, from the upper bracket 215 (shown in Fig. 2b) on the left side of the vehicle 100. The support structure 300 extends upwardly from the upper bracket 215 and then further extends upwardly beyond the height of the handle bar assembly 115, such that the support structure 300 supports the display unit 235 above the purview of the handle bar assembly 115. The support structure 300 is attached to the display unit bottom 305 portion as per the present illustrated embodiment.

As per an alternate embodiment support structure 300 is adjustable in nature to enable one of a vertical, angular and a lateral disposition of the display unit within the said ellipsoid for optimum and safe viewing in a dynamic position change of the rider.

**Fig. 4** illustrates a side view of a front portion of a vehicle 100 in accordance with an embodiment of the present invention. As per the present embodiment as illustrated, the display unit 235 is placed substantially vertically above the headlamp assembly 105 and the front fork assembly 210; and is disposed substantially near but above the handle bar assembly 115. The display unit 235 is further shown to include a top member 310 as a top portion that acts as a top cover, and the bottom member 305 as a bottom portion that receives the support structure 300 from below and receives a middle member 315 from above. The middle member 315 further receives the top member 310 and displays the contents of the display unit 235. The lower portion 320 of the support structure 300 is mounted to the upper bracket 215 by means of fasteners (not shown). As per an alternate embodiment, the lower portion 320 of the support structure 300 is welded to the upper bracket 215.

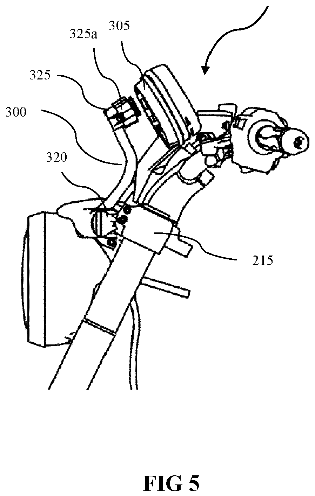

**Fig. 5** illustrates a side view of a front portion of a vehicle 100 in accordance with an embodiment of the present invention. The present illustration illustrates that the lower portion 320 of the support structure 300 is mounted to the front end of the upper bracket 215. The upper end of the support structure 300 herein called as a upper portion 325 includes a protruded provision herein called as an attachment provision 325a. The attachment provision 325a is further attached to the bottom member 305 by means of welding or by means of thread locking provision. As per an alternate embodiment the attachment provision 325a includes a plurality of threads and the bottom member 305 includes an inwardly placed provision to receive the protruded attachment provision 325a with threads.

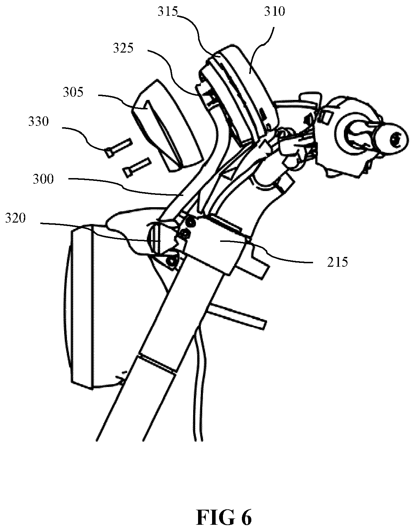

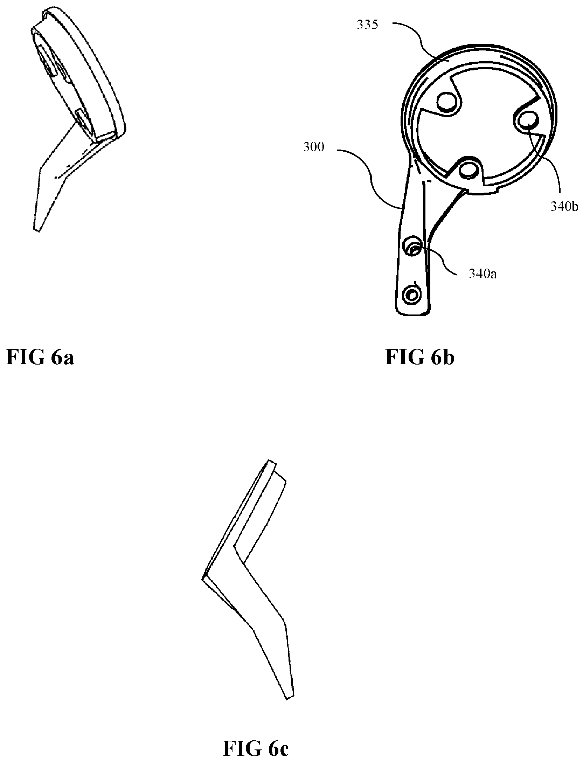

**Fig. 6** illustrates a side view of a front portion of a vehicle 100 in accordance with an alternate embodiment of the present invention. The present embodiment illustrates that the middle member 315 of the display unit 235 being capable of receiving the upper member 325 directly from below. And then the top cover 310 covers the middle member 315 of the display unit 235 from above and the bottom member 305 is fastened to the middle member 315 of the display unit 235 from below by means of a plurality of fasteners 330. Further, the lower portion 320 of the support structure 300 is mounted to the front end of the upper bracket 215.

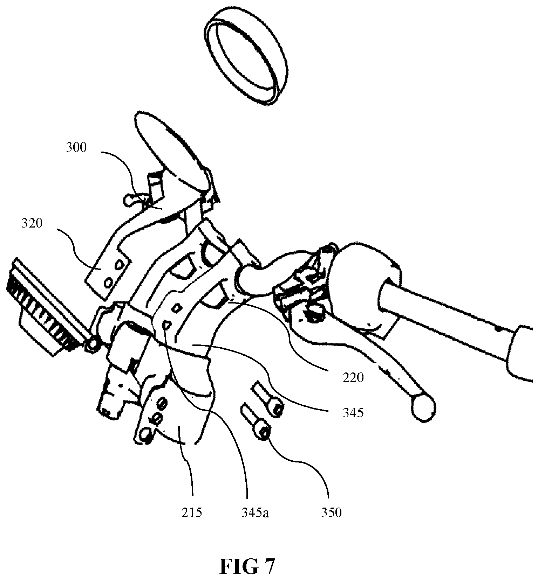

**Fig. 6a to Fig. 6c** illustrates multiple perspective views of the support structure 300 of a display unit of a vehicle 100 in accordance with an alternate embodiment of the present invention. As per an alternate embodiment, the support structure 300 on its upper portion 325 includes an additional support structure, herein called as a ring support structure 335. The ring support structure 335 is designed so that it is capable of receiving the bottom member 305 (shown in Fig. 5) portion and then the bottom member 305 is fastened to the ring support structure 335 by means of a plurality of fasteners fastened at the plurality of abutment provisions 340b. The support structure lower 320 is capable of being further disposed on the upper bracket 215 (shown in Fig. 7) by means of a plurality of fasteners fastened at the plurality of abutment provisions 340a.

**Fig. 7** illustrates an exploded front perspective view of a front portion of a vehicle 100 in accordance with an alternate embodiment of the present invention. The present illustration illustrates that the pair of raisers 220 are provided in between the handle bar assembly 115 (shown in Fig. 1) and the upper bracket (215). The lower portion of the one or more raiser 220, herein called as a raiser bottom 345 includes one or more abutment provisions 345a. The lower portion 320 of the support structure 300 is capable of being fastened to the raiser bottom 345 by means of one or more fasteners 350 fastened at the one or more abutment provisions 345a of the raiser 220. As per an alternate embodiment, the lower portion 320 of the support structure 300 is capable of being welded to the raiser bottom 345 of the raiser 220.

Many modifications and variations of the present subject matter are possible in the light of above disclosure. Therefore, within the scope of claims of the present subject matter, the present disclosure may be practiced other than as specifically described.

**LIST OF REFERENCE NUMERALS**

| | |
|---|---|
| 100:Vehicle | 190: Front fender |
| 105: Headlamp assembly | 195: Front suspension |
| 110: Headlamp | 196 Frame assembly |
| 115: Handlebar assembly | 200: Handle bar grip |
| 120: Fuel tank assembly | 205: Switch panel |
| 125: Seat assembly | 210: Front fork |
| 130: Tail cover assembly | 215: Upper bracket |
| 135: Pillion handle | 220: Raiser |
| 140a: Front indicator lights | 225: Key slot |
| 140b: Rear indicator lights | 230: Cable |
| 145: Rear fender | 235: Display unit |
| 150: Rear wheel | 240: Handle bar tube |
| 155: Muffler assembly | 300: Support Structure |
| 160: Rear suspension system | 305: Bottom member |
| 165: Centre stand | 310: Top member |
| 170: Cover frame assembly | 315: Middle member |
| 175: Engine cover | 320: Lower portion |
| 180: Engine assembly | 325: Upper portion |
| 185: Front wheel | 330, 350: Fastener |
| 330: Fastener | 345: Raiser bottom |
| 335: Ring support structure | 355: Attachment provision |
| 345a, 340a, 340b: Abutment provisions | |

## Claims

1. A display unit (235) mounting of a vehicle (100) comprising:
a handle bar assembly (105),
one or more raisers (220), said one or more raisers (220) supporting said handle bar assembly (105);
an upper bracket, said upper bracket (215) supporting said one or more raisers (220);
and a display unit (235);
wherein,
said display unit (235) is mounted to a support structure (300);
wherein,
said support structure (300) configures said display unit (235) at a offset distance in a vertical direction (DD'),.

2. The display unit (235) mounting on a vehicle (100) as claimed in claim 1 wherein, said offset distance is a distance (L).

3. The display unit (235) mounting on a vehicle (100) as claimed in claim 1 wherein, said support structure (300) being mounted to said upper bracket (215).

4. The display unit (235) mounting on a vehicle (100) as claimed in claim 1 wherein, said support structure (300) includes a lower portion (320) and a upper portion (325).

5. The display unit (235) mounting on a vehicle (100) as claimed in claim 4 wherein, said lower portion (320) of said support structure (300) is mounted to an upper bracket (215) by means one of a fasteners or by welding.

6. The display unit (235) mounting on a vehicle (100) as claimed in claim 1 wherein, said support structure (300) is mounted to said one or more raisers (220).

7. The display unit (235) mounting on a vehicle (100) as claimed in claim 4 wherein, said lower portion (320) of said support structure (300) is mounted to one or more raisers (220) by means one or more of fasteners or by welding.

8. The display unit (235) mounting on a vehicle (100) as claimed in claim 1 wherein, display surface of said display unit (235) makes an angle θ with a horizontal plane passing through a axis AA' passing through the handlebar portion disposed between the raisers (220).

9. The display unit (235) mounting on a vehicle (100) as claimed in claim 1 wherein, said display unit (235) includes a bottom member (305), a top member (310), and a middle member (315).

10. The display unit (235) mounting on a vehicle (100) as claimed in claim 9 wherein, said bottom member (305) acts as a bottom portion for said display unit (235) and receives said middle member (315) above it.

11. The display unit (235) mounting on a vehicle (100) as claimed in claim 9 wherein, said bottom member (305) receives a support structure (300) below it.

12. The display unit (235) mounting on a vehicle (100) as claimed in claim 9 wherein, said support structure (300) is fixedly attached to said bottom member (305).

13. The display unit (235) mounting on a vehicle (100) as claimed in claim 4 wherein, said support structure upper (325) includes a protruded attachment provision (325a).

14. The display unit (235) mounting on a vehicle (100) as claimed in claim 14 wherein, said attachment provision (325a) is fixedly attached to the bottom member (305) by means of welding or by means of thread locking provision.

15. The display unit (235) mounting on a vehicle (100) as claimed in claim 9 wherein, said bottom member (305) includes an inwardly placed provision to receive a protruded attachment provision (325a) with threads.

16. The display unit (235) mounting on a vehicle (100) as claimed in claim 9 wherein, said middle member (315) of said display unit (235) receives said upper portion (325) directly.

17. The display unit (235) mounting on a vehicle (100) as claimed in claim 1 wherein, said support structure (300) on a upper portion (325) includes a ring support structure (335).

18. The display unit (235) mounting on a vehicle (100) as claimed in claim 17 wherein, said ring support structure (335) receives said bottom member (305).

19. The display unit (235) mounting on a vehicle (100) as claimed in claim 18 wherein, said ring support structure (335) is fastened to said bottom member (305) by means of a plurality of fasteners fastened at a plurality of abutment provisions (340b) at a volumetric region defined by ellipsoid of dimension L x WxCd.

20. The display unit (235) mounting on a vehicle (100) as claimed in claim 19 wherein, said dimension L is substantially equal to said dimension Cd.

21. The display unit (235) mounting on a vehicle (100) as claimed in claim 19 wherein, said dimension W is equal to 2 times of said dimension L or sai dimension Cd

22. The display unit (235) mounting on a vehicle (100) as claimed in claim 1 wherein, said support structure (300) is adjustable.

23. The display unit (235) mounting on a vehicle (100) as claimed in claim 1 wherein, said display unit (235) is disposed offset from a longitudinal central plane of said vehicle (100) such that said display unit (235) at least partially overlaps one of the right or left suspension front fork (210).
